(19) Europäisches Patentamt / European Patent Office / Office européen des brevets

(11) **EP 2 345 548 B1**

(12) **EUROPEAN PATENT SPECIFICATION**

(45) Date of publication and mention
of the grant of the patent:
**26.06.2013 Bulletin 2013/26**

(21) Application number: **09821883.7**

(22) Date of filing: **03.09.2009**

(51) Int Cl.:
**B60C 15/06** (2006.01)   **B29D 30/38** (2006.01)

(86) International application number:
**PCT/JP2009/065420**

(87) International publication number:
**WO 2010/047183 (29.04.2010 Gazette 2010/17)**

(54) **TIRE**

REIFEN

PNEUMATIQUE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **21.10.2008 JP 2008270718**

(43) Date of publication of application:
**20.07.2011 Bulletin 2011/29**

(73) Proprietor: **Bridgestone Corporation
Tokyo 104-8340 (JP)**

(72) Inventor: **ASARI, Jyunya
Kodaira-shi
Tokyo 187-8531 (JP)**

(74) Representative: **Waldren, Robin Michael et al
Marks & Clerk LLP
90 Long Acre
London
WC2E 9RA (GB)**

(56) References cited:
**JP-A- 2001 225 618     JP-A- 2002 219 912
JP-A- 2002 219 913     JP-A- 2007 145 272
JP-A- 2008 143 291**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a tire and, in particular, a tire having improved durability of a bead portion.

Prior Art

A product life of a tire before being disposed as waste has been significantly prolonged in recent years due to improvement in wear resistance of tread, and the like. In order to adapt to such a prolonged product life of a tire as described above, the conventional tires have taken measures for addressing troubles such as separation at a bead portion of a tire on the widthwise-outer side of a carcass turn-up portion thereof, separation in a portion covering a carcass main body, of a wire chafer, at the outermost end in the tire radial direction thereof, and the like. However, it has turned out that the aforementioned conventional tires still experience a problem that troubles of a bead portion occur at the outermost end in the tire radial direction of a portion covering a carcass main body, of a textile chafer, at the later stage of a tire product life.

In view of the problem described above, there has been a demand for a tire of which durability of a bead portion is improved by suppressing troubles of the bead portion occurring at the outermost end in the tire radial direction of a portion covering a carcass main body, of a textile chafer, while maintaining durability against separation at the bead portion of the tire on the widthwise-outer side of a carcass turn-up portion thereof and separation in a portion covering the carcass main body, of a wire chafer, at the outermost end in the tire radial direction thereof. In order to meet such a demand as described above, JP 2002-219912 and JP 2008-143291 disclose techniques for improving durability against separation on the outer side of a carcass turn-up portion of a tire and durability against separation in a portion covering a carcass main body, of a wire chafer, at the outermost end in the tire radial direction thereof. However, neither JP 2002-219912 nor JP 2008-143291 can offer sufficient durability at the outermost end in the tire radial direction of a portion covering a carcass main body, of a textile chafer. Attention is drawn to the disclosure of JP 2007-195212.

Disclosure of the Invention Problems to be solved by the Invention

In view of the facts above, an object of the present invention is to provide a tire having improved durability of a bead portion.

Means for solving the Problem

The inventors of the present invention have discovered, as a result of a keen study of the mechanism of troubles of a bead portion initiated at the outermost end in the tire radial direction of a portion covering a carcass main body, of a textile chafer, that i) in a case where an expansion rate of a textile chafer is relatively large, the textile chafer shrinks during the tire vulcanization process and a crease is generated in an inner liner layer from the outermost end in the tire radial direction of a portion covering a carcass main body, of the textile chafer, due to the shrinkage of the textile chafer; ii) then cracks are generated from the crease as the starting point and coating rubber of a carcass ply deteriorates due to oxygen transmitted through the cracks; and iii) the coating rubber is exfoliated along ply cords of the carcass at the later stage of the product life of the tire, causing troubles of a bead portion. In other words, it has been revealed that such troubles of a bead portion as described above can be prevented from occurring by suppressing an expansion rate of a textile chafer of a tire during the production process. As a result of a further study in view of these discoveries to achieve the aforementioned object, the inventors of the present invention have further discovered that it is possible to provide a tire having enhanced durability of a bead portion and a prolonged product life by suppressing an expansion rate of a textile chafer during the production process of the tire and producing the tire such that, providing that the center of a flange curvature (having a radius r) of a rim is P and the outer most end in the tire radial direction of a portion covering a carcass main body, of a textile chafer, is A, an angle formed by a line passing P and in parallel with the tire rotation axis, with respect to a line linking P and A, is in a predetermined range under predetermined conditions, thereby completing the present invention.

Specifically, the main structure of the present invention is as follows. (1) A tire having: at least one layer of carcass, including a carcass main body extending in a toroidal shape across a pair of bead cores and a carcass turn-up portion wound around each bead core from the inner side toward the outer side in the tire widthwise direction and extending in the tire radial direction; at least two layers of textile chafer extending from the carcass main body toward the carcass turn-up portion so as to cover the carcass; and at least one layer of wire chafer, characterized in that: in a state where the tire is assembled with a "design rim" prescribed in TRA (The Tire and Rim Association, Inc.,) and inflated at an inner pressure of 50 kPa and providing that the center of a flange curvature of a rim is P and the outer most end in the tire radial direction of a portion covering a carcass main body, of a textile chafer, is A, an angle $\theta$ formed by a line passing P and in parallel with the tire rotation axis, with respect to a line linking P and A, is in a range of $20° \leq \theta \leq 60°$.

(2) The tire of (1) above, wherein cords of one layer of the textile chafer extend in a direction intersecting cords of another layer of the textile chafer, and an angle $\alpha$ formed by a cord with respect to a line tangent to a circle coaxial with the outer periphery of the tire at a point on the cord (the circle crosses the cord at the point) is in the range of $20° \leq \alpha \leq 70°$.

(3) The tire of (1) or (2) above, wherein, providing that: the angle $\theta$ is in the range of $20° \leq \theta \leq 30°$; tire section height is SH, rim radius is R, rim flange height of the design rim is Hf; position at the tire outer-side surface, where the distance between said position and the tire rotation shaft in the tire radial direction is $(R + 1.18 \times Hf)$, is P 1 and position at the tire outer-side surface, where the distance between said position and the tire rotation shaft in the tire radial direction is $(R + 0.81 \times Hf$, is P2; crossing-point of a first line drawn from P1 to be normal to the carcass main body, with the carcass turn-up portion, is T1 and crossing-point of a second line drawn from P2 to be normal to the carcass main body, with the carcass turn-up portion, is T2; crossing-point of the first line with the carcass main body is M1 and crossing-point of the second line with the carcass main body is M2; and distance between P1 and T1 is W1pt, distance between T1 and M1 is W1tm, distance between P2 and M2 is W2pt, distance between T2 and M2 is W2tm, the parameters satisfy formulae (I) to (IV).

$$0.053 \times SH < W1pt < 0.068 \times SH \quad \cdots \text{ (I)}$$

$$0.017 \times SH < W1tm < 0.032 \times SH \quad \cdots \text{ (II)}$$

$$0.028 \times SH < W2tm < 0.043 \times SH \quad \cdots \text{ (III)}$$

$$0.010 \times SH < W1pt - W2pt < 0.030 \times SH \quad \cdots \text{ (IV)}$$

(4) A method of producing the tire of any one of (1) to (3) above, characterized in that: providing that circumference of a circle having: as radius the distance in the tire radial direction between the radial-direction outermost end of a portion covering the carcass main body, of the textile chafer, and the tire axis S; and as the center thereof the intersection of a line drawn from said outermost end to be normal to the tire axis, with the tire axis, after a tire-molding process, is L, and circumference of a circle having: as radius the distance in the tire radial direction between the radial-direction outermost end of a portion covering the carcass main body, of the textile chafer, and the tire axis S; and as the center thereof the intersection of a line drawn from said outermost end to be normal to the tire axis, with the tire axis, after a tire-vulcanization process, is M, an expansion rate of the textile chafer in a period from the tire-molding process to a finishing stage $(M/L \times 100)$ is in the range of 100 to 110%.

Effect of the Invention

According to the present invention, providing that the center of a flange curvature (having a radius r) of a rim is P and the outer most end in the tire radial direction of a portion covering a carcass main body, of a textile chafer, is A, by setting an angle $\theta$ formed by a line passing P and in parallel with the tire rotation axis, with respect to a line linking P and A, in a range of $20° \leq \theta \leq 60°$, troubles of a bead portion at the outermost end in the tire radial direction of the portion covering the carcass main body, of the textile chafer, is suppressed and a tire having enhanced durability of a bead portion and a prolonged product life can be provided without adding any new member in the bead portion.

Brief Description of the Drawings

FIG. 1 is a partial sectional view of one example of a tire according to the present invention.
FIG. 2 is a partial sectional view of another example of the tire according to the present invention.
FIG. 3 is an explanatory view of another example of the tire according to the present invention.
FIG. 4 is a partial sectional view of another example of the tire according to the present invention.

Best Mode for carrying out the Invention

The present invention will be described in detail with reference to drawings hereinafter.

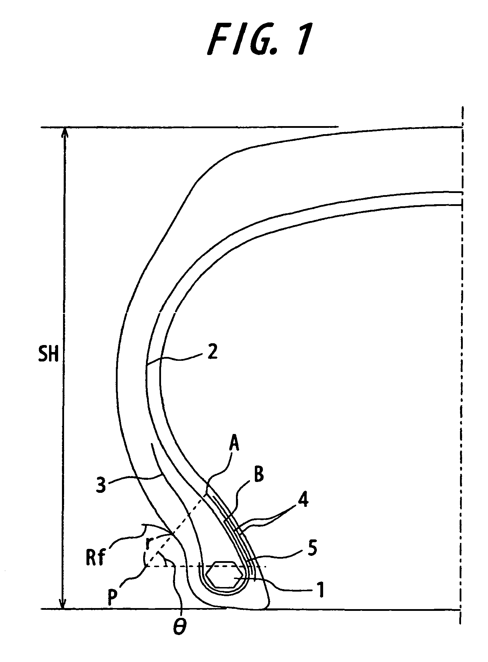

In the one example of a tire according to the present invention shown in FIG. 1, a tire has: at least one layer of carcass, including a carcass main body 2 extending in a toroidal shape across a pair of bead cores 1 and a carcass turn-up portion 3 continuous with the carcass main body 2 and wound around each bead core from the inner side toward the outer side in the tire widthwise direction to extend in the tire radial direction; at least two layers of textile chafer 4 disposed on the tire-radial direction inner surface of the carcass with respect to the bead core 1; and at least one layer of wire chafer 5.

It is essentially important that the tire of the present invention is designed such that, in a state where the tire is assembled with a "design rim" prescribed in TRA (The Tire and Rim Association, Inc.,) and inflated at an inner pressure of 50 kPa, and providing that the center of a flange curvature (having a radius r) of the rim is P and the outer most end in the tire radial direction of a portion covering the carcass main body, of the textile chafer, is A, an angle $\theta$ formed by a line passing P and in parallel with the tire rotation axis, with respect to a line linking P and A, is set in a range of 20° $\leq \theta \leq$ 60°, as shown in FIG. 1. The angle $\theta$ is approximately 66° in the conventional tires and, in such conventional cases, generation of a crease may occur in an inner liner layer at the outer most end in the tire radial direction of a portion covering the carcass main body, of the textile chafer. In the tire of the present invention, such a crease as in the conventional cases is hardly generated because the angle $\theta$ is set to be not larger than 60°. In a case where the angle $\theta$ is smaller than 20°, the outer most end in the tire radial direction of a portion covering the carcass main body, of the wire chafer, which is protected by textile chafer, is positioned too low, whereby an effect of suppressing collapse of the tire toward the back face of the flange is reduced and the durability on the outer side in the tire widthwise direction of the carcass turn-up portion is extremely decreased, as disclosed in JP 2002-219912 Laid-Open. In the present embodiment, in a case where the angle $\theta$ is in the range of 20° $\leq \theta \leq$ 30°, it is preferable to employ a case line of a bead portion having a good effect of suppressing collapse of the bead portion, as defmed by the aforementioned formulae (I) to (IV) of (3) above, to compensate decrease in the collapse-suppressing effect by the adjacent wire chafer.

In the present embodiment, the lower positions of the textile chafer 4 and the wire chafer 5 extending toward the carcass turn-up portion are not particularly restricted. Further, the number of layers of the textile chafer is not particularly restricted, either, as long as the textile chafer is constituted of at least two layers.

In the present embodiment, the center P of the flange curvature of the rim represents the center of curvature at the rear end portion of the flange of the rim.

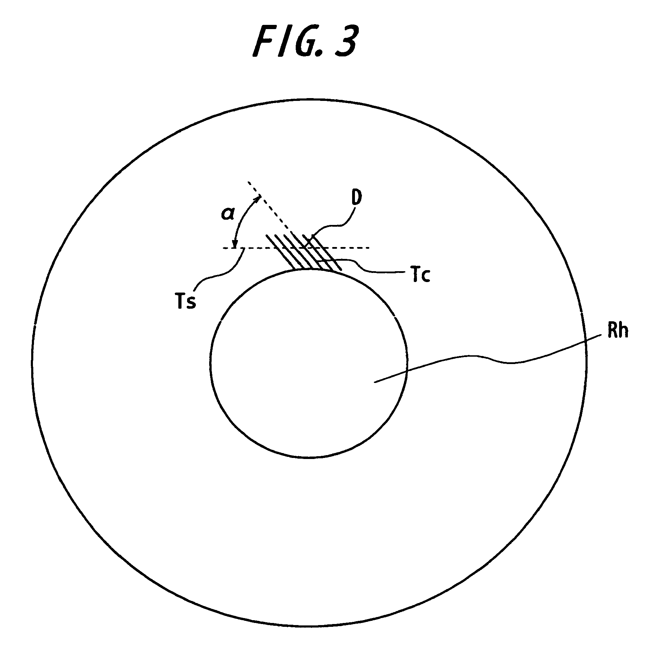

The textile chafer 4 is constituted of parallel-disposed fiber cords and rubber coated thereon. The wire chafer 5 is constituted of parallel-disposed steel cords and rubber coated thereon. The tire of the present invention is preferably designed such that cords of one layer of the textile chafer extend in a direction intersecting cords of another layer of the textile chafer and an angle $\alpha$ formed by a cord Tc with respect to a line Ts tangent to a circle coaxial with the outer periphery of the tire at a point D on the cord (the circle crosses the cord at the point D) is in the range of 20° $\leq \alpha \leq$ 70°, as shown in FIG. 3. In the present embodiment, in a case where the angle $\alpha$ exceeds 70° in the textile chafer, the intersection of fiber cords of one layer with those of another layer in the textile chafer cannot make sufficient contribution to increase in rigidity, although shrinkage of the textile chafer during the vulcanization process is suppressed. In a case where the angle $\alpha$ is smaller than 20°, there cannot be obtained a sufficient effect of suppressing an expansion rate of the textile chafer in the tire production process.

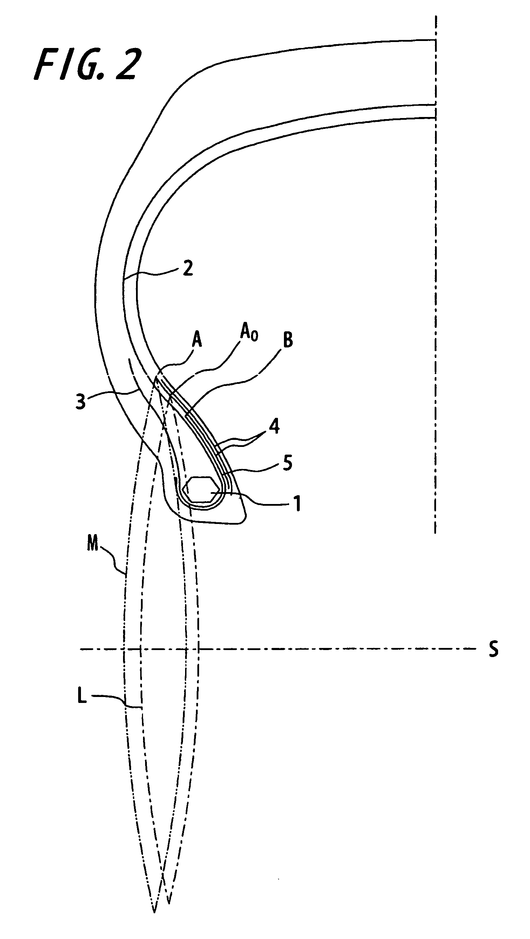

In a case where the angle $\theta$ is in the range of 20° $\leq \theta \leq$ 60°, an expansion rate of the textile chafer in a period from the tire-molding process to the finishing stage (M/L $\times$ 100) is generally suppressed to 110% or lower, whereby a crease will be hardly generated. However, depending on production conditions, there may be generated slight difference in the expansion rate if the same angle $\theta$ is applied. In view of this, in order to reliably prevent troubles from occurring in the bead portion, the method of producing a tire according to the present invention preferably includes setting, providing that circumference of a circle having: as radius the distance in the tire radial direction between the radial-direction outermost end $A_0$ of the textile chafer and the tire axis S; and as the center thereof the intersection of a line drawn from said outermost end $A_0$ to be normal to the tire axis S, with the tire axis S, after a tire-molding process, is L, and circumference of a circle having: as radius the distance in the tire radial direction between the radial-direction outermost end A of the textile chafer and the tire axis S; and as the center thereof the intersection of a line drawn from said outermost end A to be normal to the tire axis S, with the tire axis S, after a tire-vulcanization process, is M, an expansion rate of circumference of the textile chafer in a period from the tire-molding process to the post-vulcanization (a finished state) (M/L $\times$ 100) in the range of 100 to110%, as shown in FIG. 2.

In the tire of the present invention, a method of setting an expansion rate of the textile chafer within the aforementioned range is not particularly restricted and examples thereof include selecting for use an appropriate member for the textile chafer.

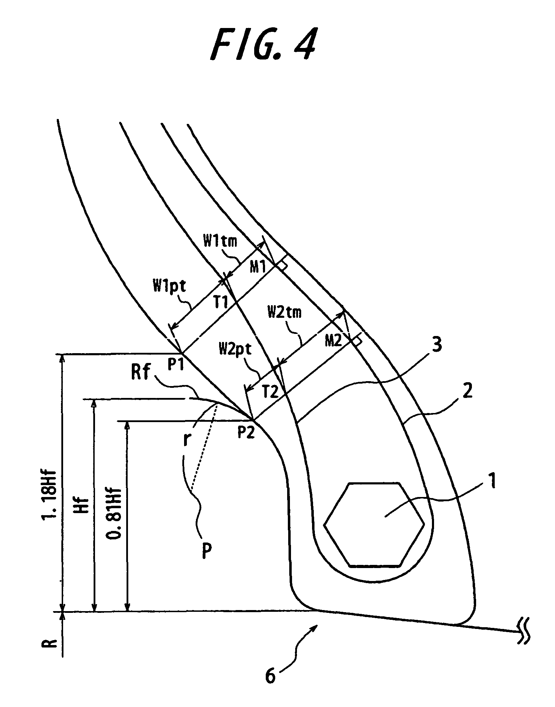

Further, the tire of the present invention is preferably designed such that, providing that: tire section height is SH, rim radius is R, rim flange height of the design rim is Hf; position at the tire outer-side surface, where the distance between said position and the tire rotation shaft in the tire radial direction is (R + 1.18 × Hf), is P1 and position at the tire outer-side surface, where the distance between said position and the tire rotation shaft in the tire radial direction is (R + 0.81 × Hf), is P2; crossing-point of a first line drawn from P1 to be normal to the carcass main body, with the carcass turn-up portion, is T1 and crossing-point of a second line drawn from P2 to be normal to the carcass main body, with the carcass turn-up portion, is T2; crossing-point of the first line with the carcass main body is M1 and crossing-point of the second line with the carcass main body is M2; and distance between P1 and T1 is W1pt, distance between T1 and M1 is W1tm, distance between P2 and M2 is W2pt, distance between T2 and M2 is W2tm, the parameters satisfy the aforementioned formulae (I) to (IV), as shown in FIGS. 1 and 4.

The tire of the present invention preferably satisfies the aforementioned formula (I) because then durability on the outer side in the tire widthwise direction of the carcass turn-up potion 3 in the vicinity of T1 can be enhanced without increasing the temperature in the vicinity of T1, as compared with the conventional tires. Further, the tire of the present invention preferably satisfies the aforementioned formula (II) because then durability of a rubber layer between the carcass main body and the carcass turn-up portion can be set at the same level as or higher than that of the conventional tires and durability on the outer side in the tire widthwise direction of the carcass turn-up potion 3 in the vicinity of T1 can be enhanced. Yet further, the tire of the present invention preferably satisfies the aforementioned formula (III) because then durability of the tire against fracture of carcass cords and durability on the outer side in the tire widthwise direction of the carcass turn-up potion 3 in the vicinity of T1 can be both enhanced. Yet further, the tire of the present invention preferably satisfies the aforementioned formula (IV) because there can be obtained a case line of a bead portion, which case line allows the carcass main body 2 and the carcass turn-up potion 3 to be produced without being affected by decrease in W2tm.

Accordingly, in the tire of the present invention, it is possible to simultaneously improve three durability values, i.e. durability on the outer side in the tire widthwise direction of the carcass turn-up potion 3 in the vicinity of T1, durability of a rubber layer between the carcass main body and the carcass turn-up portion, and durability against fracture of carcass cords, by satisfying the aforementioned formulae (I) to (IV). That is, all of the three durability values described above can be improved only by modifying a configuration of a carcass line in the vicinity of the bead portion 6, without adding a new member which does not exist in the conventional tires.

The tire of the present invention is not particularly restricted, except that the tire having: at least one layer of carcass, including a carcass main body extending in a toroidal shape across a pair of bead cores and a carcass turn-up portion continuous with the carcass main body and wound around each bead core from the inner side toward the outer side in the tire widthwise direction to extend in the tire radial direction; at least two layers of textile chafer disposed on the tire-radial direction inner surface of the carcass with respect to the bead core; and at least one layer of wire chafer, is characterized in that: in a state where the tire is assembled with a "design rim" prescribed in TRA and inflated at an inner pressure of 50 kPa and, providing that the center of a flange curvature of the rim is P and the outer most end in the tire radial direction of a portion covering the carcass main body, of the textile chafer, is A, an angle θ formed by a line passing P and in parallel with the tire rotation axis, with respect to a line linking P and A, is in a range of 20° ≤ θ ≤ 60°. The tire of the present invention can be produced by the known method based on the known tire structure. The tire of the present invention may be either a solid tire or a pneumatic tire. In a case where the tire of the present invention is a pneumatic tire, examples of gas with which the tire is to be filled include ambient air, air having adjusted oxygen partial pressure, and inert gas such as nitrogen, argon, helium, and the like.

The tire of the present invention can be preferably used as a pneumatic radial tire for heavy load which is relatively susceptible to troubles in a bead portion, and in particular, as a pneumatic radial tire for a construction vehicle.

Examples

Hereinafter, the present invention will be described further in detail by Examples below. The present invention is not limited to these Examples and may be appropriately changed within the sprit thereof.

A test tire for a construction vehicle having size: 46/90R57 was produced according to the specifications shown in Table 1. Frequency of crease generation in the inner liner layer at the outermost end in the tire radial direction of a portion covering a carcass main body, of a textile chafer, was measured for the tire for a construction vehicle according to the method described below. The results are shown in Table 1.

(Method of evaluating frequency of crease generation)

The inner surface of a tire is visually inspected. In a case where the tire exhibits a crease of which depth exceeds 1 mm, it is judged that a crease has been "generated" in the tire, while in a case where the tire is free of a crease of which depth exceeds 1 mm, it is judged that a crease has "not been generated" in the tire. Frequency of crease generation is calculated based on these evaluation results.

[Table 1]

| | | Conventional Example | Comparative Example 1 | Example 1 |
|---|---|---|---|---|
| Tire structure | $\theta(°)$ | 66 | 63 | 60 |
| | $\alpha(°)$ | 30 | 30 | 30 |
| | W 1pt (%) (ratio to SH) | 5.0 | 5.0 | 5.0 |
| | W1tm (%) (ratio to SH) | 3.3 | 3.3 | 3.3 |
| | W2tm (%) (ratio to SH) | 4.2 | 42 | 4.2 |
| | W 1pt - W2pt (%) (ratio to SH) | 1.8 | 1.8 | 1.8 |
| Tire performance | Expansion rate M/L (%) | 113 | 111.5 | 110 |
| | Frequency of crease generation (%) | 4 | 2 | Not generated |

It is understood from Table 1 that crease is not generated when the angle $\theta$ is not larger than 60° and the expansion rate is not larger than 110%.

Further, a test tire for a construction vehicle having size: 46/90R57 was produced according to the specifications shown in Table 2. The tire was assembled with a design rim (TRA), inflated at the standard inner pressure (TRA), and subjected to a durability test by using a drum having diameter of 5 m under a load which is 170% of the standard load (TRA) to measure a running time before occurrence of separation on the outer side in the tire widthwise direction of the carcass turn-up portion of the tire. The results are shown in Table 2.

[Table 2]

| | | Conventional Example | Comparative Example 2 | Example 2 | Example 3 | Example 4 | Example 5 | Example 6 |
|---|---|---|---|---|---|---|---|---|
| Tire structure | θ(°) | 66 | 10 | 20 | 30 | 20 | 30 | 40 |
| | α(°) | 30 | 30 | 30 | 30 | 30 | 30 | 30 |
| | W1pt(%) (ratio to SH) | 5.0 | 5.0 | 5.0 | 5.0 | 6.2 | 6.2 | 5.0 |
| | Wttm(%) (ratio to SM) | 3.3 | 3.3 | 3.3 | 3.3 | 2.3 | 2.3 | 3.3 |
| | W2tm (%) (ratio to SH) | 4.2 | 4.2 | 4.2 | 4.2 | 3.9 | 3.9 | 4.2 |
| | W1pt - W2pt (%) (ratio to SH) | 1.8 | 1.8 | 1.8 | 1.8 | 2.4 | 2.4 | 1.8 |
| Tire Performance | Expansion rate M/L(%) | 113 | 97 | 100 | 103 | 100 | 103 | 106 |
| | Running time (index) | 100 | 80 | 94 | 98 | 114 | 117 | 100 |
| | Frequency of crease generation (%) | 4 | Not generated | Not generated | Not generated | Not generated | Not generated | Not generated |

It is understood from Table 2 that, in the examples sharing the same case line of a bead portion (i.e. Examples 2, 3 and 6 and Comp. Example 2), separation is likely to occur on the widthwise-outer side of the carcass turn-up portion when the angle $\theta$ is not larger than 30° and the situation further deteriorates when the angle $\theta$ is 10°.

Explanation of Reference Numerals

| | |
|---|---|
| 1 | Bead core |
| 2 | Carcass main body |
| 3 | Carcass turn-up portion |
| 4 | Textile chafer |
| 5 | Wire chafer |
| 6 | Bead portion |
| $A_0$ | Outermost end in tire radial direction of portion covering carcass main body, of textile chafer, after tire molding process |
| A | Outermost end in tire radial direction of portion covering carcass main body, of textile chafer, after tire vulcanization process |
| B | Outermost end in tire radial direction of portion covering carcass main body, of wire chafer |
| D | Point on cord |
| L | Circumference based on the outermost end in tire radial direction of a portion covering carcass main body, of textile chafer, after tire molding process |
| M | Circumference based on the outermost end in tire radial direction of a portion covering carcass main body, of textile chafer, after tire vulcanization process |
| Hf | Flange height |
| P | Center of flange curvature of rim |
| R | Radius of rim |
| r | Radius of flange curvature of rim |
| Rf | Rim flange |
| Rh | Rim hole |
| S | Tire shaft |
| SH | Section height |
| Tc | Cord |
| Ts | Line tangent to a circle coaxial with tire outer periphery at D |

**Claims**

1. A tire having: at least one layer of carcass, including a carcass main body (2) extending in a toroidal shape across a pair of bead cores (1) and a carcass turn-up portion (3) wound around each bead core from the inner side toward the outer side in the tire widthwise direction and extending in the tire radial direction; at least two layers of textile chafer (4) extending from the carcass main body toward the carcass turn-up portion so as to cover the carcass; and at least one layer of wire chafer (5),

   in a state where the tire is assembled with a "design rim" prescribed in TRA (The Tire and Rim Association, Inc.,) and inflated at an inner pressure of 50 kPa and providing that the center of a flange curvature (having a radius r) of a rim is P and the outer most end in the tire radial direction of a portion covering a carcass main body, of a textile chafer, is A, an angle $\theta$ formed by a line passing P and in parallel with the tire rotation axis, with respect to a line linking P and A, is in a range of $20° \leq \theta \leq 60°$,

   **characterized in that**: cords of one layer of the textile chafer extend in a direction intersecting cords of another layer of the textile chafer, and

   an angle $\alpha$ formed by a cord ($T_c$) with respect to a line ($T_s$) tangent to a circle coaxial with the outer periphery of the tire at a point (D) on the cord is in the range of $20° \leq \alpha \leq 70°$.

2. The tire of claim 1, wherein, providing that:

   the angle $\theta$ is in the range of $20° \leq \theta \leq 30°$;
   tire section height is SH, rim radius is R, rim flange height of the design rim is Hf;
   position at the tire outer-side surface, where the distance between said position and the tire rotation shaft in the tire radial direction is (R + 1.18 × Hf), is P1 and position at the tire outer-side surface, where the distance between said position and the tire rotation shaft in the tire radial direction is (R + 0.81 × Hf), is P2;

crossing-point of a first line drawn from P1 to be normal to the carcass main body, with the carcass turn-up portion, is T1 and crossing-point of a second line drawn from P2 to be normal to the carcass main body, with the carcass turn-up portion, is T2;

crossing-point of the first line with the carcass main body is M1 and crossing-point of the second line with the carcass main body is M2; and

distance between P1 and T1 is W1pt, distance between T1 and M1 is W1tm, distance between P2 and M2 is W2pt, distance between T2 and M2 is W2tm,

the parameters satisfy formulae (I) to (IV).

$$0.053 \times SH < W1pt < 0.068 \times SH \quad \cdots \text{(I)}$$

$$0.017 \times SH < W1tm < 0.032 \times SH \quad \cdots \text{(II)}$$

$$0.028 \times SH < W2tm < 0.043 \times SH \quad \cdots \text{(III)}$$

$$0.010 \times SH < W1pt - W2pt < 0.030 \times SH \quad \cdots \text{(IV)}$$

3. A method of producing the tire of claim 1 or 2, **characterized in that**:

providing that circumference of a circle having: as radius the distance in the tire radial direction between the radial-direction outermost end ($A_o$) of a portion covering the carcass main body, of the textile chafer, and the tire axis S; and as the center thereof the intersection of a line drawn from said outermost end ($A_o$) to be normal to the tire axis, with the tire axis, after a tire-molding process, is L, and circumference of a circle having: as radius the distance in the tire radial direction between the radial-direction outermost end (A) of a portion covering the carcass main body, of the textile chafer, and the tire axis S; and as the center thereof the intersection of a line drawn from said outermost end (A) to be normal to the tire axis, with the tire axis, after a tire-vulcanization process, is M, an expansion rate of the textile chafer in a period from the tire-molding process to a finishing stage (M/L × 100) is in the range of 100 to 110%.

## Patentansprüche

1. Reifen, der aufweist: mindestens eine Karkassenlage, die einen Karkassenhauptkörper (2), der sich in einer Ringform über ein Paar von Wulstkernen (1) erstreckt, und einen Karkassenumstülpbereich (3) umfasst, der um jeden Wulstkern von der Innenseite in Richtung der Außenseite in der Breitenrichtung des Reifens gewickelt wird und sich in der radialen Reifenrichtung erstreckt; mindestens zwei Lagen von textilem Wulstband (4), die sich vom Karkassenhauptkörper in Richtung des Karkassenumstülpbereiches erstrecken, um so die Karkasse zu bedecken; und mindestens eine Lage von Drahtwulstband (5),

in einem Zustand, wo der Reifen auf die "berechnete Felge" montiert wird, die im TRA (The Tire and Rim Association, Inc.) vorgeschrieben wird, und mit einem Innendruck von 50 kPa aufgepumpt wird und vorausgesetzt, dass der Mittelpunkt einer Flanschkrümmung (mit einem Radius r) einer Felge P ist und das äußerste Ende in der radialen Reifenrichtung eines Abschnittes, der einen Karkassenhauptkörper bedeckt, eines textilen Wulstbandes A ist, ein Winkel 0, der durch eine Linie, die P passiert und parallel zur Reifenrotationsachse, mit Bezugnahme auf eine Linie gebildet wird, die P und A verbindet, in einem Bereich von $20° \leq \theta \leq 60°$ liegt,

**dadurch gekennzeichnet, dass** die Korde einer Lage des textilen Wulstbandes sich in einer Richtung erstrecken, die die Korde einer weiteren Lage des textilen Wulstbandes schneiden, und

ein Winkel $\alpha$, der durch einen Kord ($T_c$) mit Bezugnahme auf eine Linie ($T_s$) tangential zu einem Kreis koaxial mit dem äußeren Umfang des Reifens in einem Punkt (D) auf dem Kord gebildet wird, im Bereich von $20° \leq \alpha \leq 70°$ liegt.

2. Reifen nach Anspruch 1, bei dem, vorausgesetzt, dass
der Winkel $\theta$ im Bereich von $20° \leq \theta \leq 30°$ liegt,

die Reifenschnitthöhe SH ist, der Felgenradius R ist, die Felgenflanschhöhe der berechneten Felge Hf ist;

die Position an der Außenseitenfläche des Reifens, wo der Abstand zwischen der Position und der Reifenrotationswelle in der radialen Reifenrichtung (R + 1,18 x Hf) ist, P 1 ist, und die Position an der Außenseitenfläche des Reifens, wo der Abstand zwischen der Position und der Reifenrotationswelle in der radialen Reifenrichtung (R + 0,81 x Hf) ist, P2 ist;

der Kreuzungspunkt einer ersten Linie, die von P1 senkrecht zum Karkassenhauptkörper gezogen wird, mit dem Karkassenumstülpbereich T1 ist, und der Kreuzungspunkt einer zweiten Linie, die von P2 senkrecht zum Karkassenhauptkörper gezogen wird, mit dem Karkassenumstülpbereich T2 ist;

der Kreuzungspunkt der ersten Linie mit dem Karkassenhauptkörper M1 ist und der Kreuzungspunkt der zweiten Linie mit dem Karkassenhauptkörper M2 ist; und

der Abstand zwischen P1 und T1 W1pt ist, der Abstand zwischen T1 und M1 W1tm ist, der Abstand zwischen P2 und M2 W2pt ist, der Abstand zwischen T2 und M2 W2tm ist,

wobei die Parameter die Formeln (I) bis (IV) erfüllen

$$0,053 \text{ x } SH < W1pt < 0,068 \text{ x } SH \ .... \ (I)$$

$$0,017 \text{ x } SH < W1tm < 0,032 \text{ x } SH \ .... \ (II)$$

$$0,028 \text{ x } SH < W2tm < 0,043 \text{ x } SH \ .... \ (III)$$

$$0,010 \text{ x } SH < W1pt - W2pt < 0,030 \text{ x } SH \ ... \ (IV).$$

**3.** Verfahren zur Herstellung des Reifens nach Anspruch 1 oder 2, **dadurch gekennzeichnet, dass**:

vorausgesetzt, dass der Umfang eines Kreises aufweist: als Radius den Abstand in der radialen Reifenrichtung zwischen dem äußersten Ende ($A_0$) eines Abschnittes des textilen Wulstbandes in der radialen Richtung, der den Karkassenhauptkörper bedeckt, und der Reifenachse S; und als Mittelpunkt davon den Schnittpunkt einer Linie, die vom äußersten Ende ($A_0$) senkrecht zur Reifenachse gezogen wird, mit der Reifenachse nach dem Reifenformvorgang L ist, und dass der Umfang eines Kreises aufweist: als Radius den Abstand in der radialen Reifenrichtung zwischen dem äußersten Ende (A) eines Abschnittes des textilen Wulstbandes in der radialen Richtung, der den Karkassenhauptkörper bedeckt, und der Reifenachse S; und als Mittelpunkt davon den Schnittpunkt einer Linie, die vom äußersten Ende (A) senkrecht zur Reifenachse gezogen wird, mit der Reifenachse nach einem Reifenvulkanisationsvorgang M ist, eine Dehnungsrate des textilen Wulstbandes in einer Periode vom Reifenformvorgang bis zur Fertigstellungsstufe (M/L x 100) im Bereich von 100 bis 110 % liegt.

## Revendications

**1.** Bandage pneumatique, comprenant : au moins une couche de carcasse, englobant un corps principal de la carcasse (2), s'étendant dans une forme toroïdale à travers une paire de tringles (1), et une partie retournée de la carcasse (3), enroulée autour de chaque tringle, du côté interne vers le côté externe dans la direction de la largeur du bandage pneumatique, et s'étendant dans la direction radiale du bandage pneumatique ; au moins deux couches de bandelette talon textiles (4), s'étendant du corps principal de la carcasse vers la partie retournée de la carcasse, de sorte à recouvrir la carcasse ; et au moins une couche de bandelette talon métallique (5),

dans lequel, dans l'état où le bandage pneumatique est assemblé sur une « jante étalon », prescrite dans TRA (The Tire and Rim Association, Inc.,) et gonflé à une pression interne de 50 kPa, et en supposant que le centre d'une courbure du rebord (ayant un rayon r) d'une jante correspond à P, et que l'extrémité externe extrême, dans la direction radiale du bandage pneumatique, d'une partie recouvrant un corps principal de la carcasse, d'une bandelette talon textile, correspond à A, un angle θ formé par une ligne passant par P et parallèle à l'axe de rotation du bandage pneumatique, par rapport à une ligne reliant P et A, est compris dans l'intervalle allant de 20° ≤ θ ≤60° ;

**caractérisé en ce que** des câblés d'une couche de la bandelette talon textile s'étendent dans une direction coupant les câblés d'une autre couche de la bandelette textile ; et

un angle α formé par un câblé ($T_c$) par rapport à une ligne ($T_s$), tangentielle à un cercle coaxial à la périphérie externe du bandage pneumatique au niveau d'un point (D) sur le câblé, est compris dans l'intervalle allant de 20° ≤ α ≤70°.

2. Bandage pneumatique selon la revendication 1, dans lequel, en supposant que :

l'angle θ est compris dans l'intervalle allant de 20° ≤ θ ≤ 30° ;

la hauteur de section du bandage pneumatique correspond à SH, le rayon de la jante correspondant à R, la hauteur du rebord de la jante de la jante étalon correspondant à Hf;

une position au niveau de la surface du côté externe du bandage pneumatique, où la distance entre ladite position et l'arbre de rotation du bandage pneumatique, dans la direction radiale du bandage pneumatique, correspond à (R + 1,18 x Hf), correspond à P1, et une position au niveau de la surface du côté externe du bandage pneumatique, où la distance entre ladite position et l'arbre de rotation du bandage pneumatique, dans la direction radiale du bandage pneumatique, correspond à (R + 0,81 x Hf), correspond à P2 ;

un point de croisement d'une première ligne tracée à partir de P1, de sorte à être perpendiculaire au corps principal de la carcasse, avec la partie retournée de la carcasse, correspond à T1, et le point de croisement d'une deuxième ligne tracée à partir de P2, de sorte à être perpendiculaire au corps principal de la carcasse, avec la partie retournée de la carcasse, correspond à T2 ;

le point de croisement de la première ligne avec le corps principal de la carcasse correspond à M1, et le point de croisement de la deuxième ligne avec le corps principal de la carcasse correspond à M2 ; et

la distance entre P1 et T1 correspond à W1pt, la distance entre T1 et M1 correspondant à W1tm, la distance entre P2 et M2 correspondant à W2pt ; la distance entre T2 et M2 correspondant à W2tm ;

les paramètres satisfont les formules (I) à (IV)

$$0,053 \text{ x } SH < W1pt < 0,068 \text{ x } SH \qquad \dots \text{ (I)}$$

$$0,017 \text{ x } SH < W1tm < 0,032 \text{ x } SH \qquad \dots \text{ (II)}$$

$$0,028 \text{ x } SH < W2tm < 0,043 \text{ x } SH \qquad \dots \text{ (III)}$$

$$0,010 \text{ x } SH < W1pt - W2pt < 0,030 \text{ x } SH \qquad \dots \text{ (IV)}.$$

3. Procédé de production du bandage pneumatique selon les revendications 1 ou 2, **caractérisé en ce que** :

supposant que la circonférence d'un cercle ayant : comme rayon, la distance, dans la direction radiale du bandage pneumatique, entre l'extrémité externe extrême dans la direction radiale ($A_O$) d'une partie recouvrant le corps principal de la carasse, de la bandelette talon textile, et l'axe du bandage pneumatique S ; et comme centre, l'intersection d'une ligne tracée à partir de ladite extrémité externe extrême ($A_O$), de sorte à être perpendiculaire à l'axe du bandage pneumatique, avec l'axe du bandage pneumatique, après un processus de moulage du bandage pneumatique, correspondant à L, et la circonférence d'un cercle ayant : comme rayon, la distance, dans la direction radiale du bandage pneumatique, entre l'extrémité externe extrême dans la direction radiale (A), d'une partie recouvrant le corps principal de la carcasse, de la bandelette talon textile, et l'axe du bandage pneumatique S ; et comme centre, l'intersection d'une ligne tracée à partir de ladite extrémité externe extrême (A) , de sorte à être perpendiculaire à l'axe du bandage pneumatique, avec l'axe du bandage pneumatique, après un processus de vulcanisation du bandage pneumatique, correspondant à M, un taux d'expansion de la bandelette talon textile pendant une période s'étendant entre le processus de moulage du bandage pneumatique et un stade de finition (M/L x 100) est compris dans l'intervalle allant de 100 à 110%.

# FIG. 1

# FIG. 2

# FIG. 3

# FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002219912 A
- JP 2008143291 A
- JP 2007195212 A